(19) Europäisches Patentamt
European Patent Office
Office européen des brevets

(11) **EP 2 287 715 B1**

(12) **EUROPEAN PATENT SPECIFICATION**

(45) Date of publication and mention of the grant of the patent:
**07.06.2017 Bulletin 2017/23**

(51) Int Cl.:
***G06F 3/045*** (2006.01)

(21) Application number: **10168769.7**

(22) Date of filing: **07.07.2010**

(54) **Positioning method for touch screen**

Positionierungsverfahren für Berührungsbildschirm

Procédé de positionnement pour écran tactile

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.07.2009 CN 200910304151**

(43) Date of publication of application:
**23.02.2011 Bulletin 2011/08**

(73) Proprietor: **InnoLux Corporation Jhu-Nan 350, Miao-Li County (TW)**

(72) Inventors:
• **Chen, Po-Yang 350, Chu-Nan (TW)**

• **Shih, Po-Sheng 350, Chu-Nan (TW)**
• **Pan, Hsuan-Lin 350, Chu-Nan (TW)**

(74) Representative: **Straus, Alexander et al Patentanwälte Becker, Kurig, Straus Bavariastrasse 7 80336 München (DE)**

(56) References cited:
**EP-A2- 2 063 349        WO-A1-2009/023242
US-A1- 2006 032 680     US-B1- 6 504 531**

**Description**

BACKGROUND

1. Technical Field

The disclosure is related to a positioning method of a touch screen. There is also disclosed a touch device including means for implementing the detection methods.

2. Description of Related Art

Touch screens mainly include resistive type, capacitive type, infrared type, and surface acoustic wave type. In a four-wire or a five-wire resistive type touch screen, the variance of voltage in the conductive film is measured in an analog method. Therefore, merely a single point can be determined at a single time point during using the touch screen. If a user operates the touch screen by simultaneously touching multi points on the touch screen, a mis-determination is caused.

A touch screen capable of simultaneously determining two or more touch points is called a multi-touch screen. A multi-touch screen is generally a multi-wire capacitive type touch screen which includes two transparent conductive layers respectively disposed at two surfaces of a transparent glass. According to the resolution of the product, each of the two conductive layers forms a plurality of patterned and parallel conductive lines. In addition, the conductive lines in two different surfaces are perpendicular to one another. The conductive lines are scanned again and again, and the variances of the capacitances by scanning the conductive lines are analyzed to determine the coordinate of a touch point.

However, the manufacturing method of the touch screen capable of simultaneously determining multi touch points is difficult and the driving method thereof is complex. Therefore, the cost of the multi-touch touch screen is increased so that the products suitable for applying the multi-touch touch screen is restricted in certain types. EP2063349 A2 discloses a touch control device and a method thereof. A driving voltage is applied to a first conductive layer (10) of the touch control device. A second conductive layer (21) is connected via scanning lines (61) to a scan sensing circuit (6). To detect the location where a touch or depression occurs, the scan sensing circuit (6) repeatedly and sequentially scans first ends (Y1a, ..., Yna) of multiple elongate conductive strips (Y1, ..., Yn) that constitute the second conductive layer (21). The coordinates of the location of the depression is determined on the basis of the scanning result that the scan sensing circuit (6) performs over the elongate conductive strips (Y1, ..., Yn) of the second conductive layer (21) and the voltage that the first conductive layer (10) applies to one or more of the elongate conductive strips (Y1, ..., Yn) of the second conductive layer (21) that correspond to the location of the depression. The second ends (Y1b, ..., Ynb) of the elongate conductive strips (Y1, ..., Yn) of the second conductive layer (21) can also be connected to the scan sensing circuit (6) via scanning lines (61a) to allow the scan sensing circuit (6) to perform scanning operation over the first and second ends (Y1a, ..., Yna; Y1b, ..., Ynb) of the elongate conductive strips (Y1, ..., Yn) of the second conductive layer (21) in a sequential and repeated manner. WO2009023242 A1 discloses a cover sheet assembly (10) for a touchscreen system. The cover sheet assembly includes an insulating layer (12) having a surface (14) configured to be disposed over an electrically conductive area of a substrate of the touchscreen system, and an electrically conductive material (16) disposed on at least a portion of the surface of the insulating layer. The electrically conductive material includes a plurality of carbon nanoparticles (17) and a plurality of metal nanoparticles (19). US6504531 B1 discloses that a fabric-made position detector has a first fabric electrically conducting layer and a second fabric electrically conducting layer. The first electrically conducting layer has a first electrical contact and a second electrical contact and a second electrically conducting layer has a third electrically conducting contact and a fourth electrically conducting contact. Potential is applied across the first contact and the third contact to produce a first current and a potential is then applied across the second contact and the fourth contact to produce a second current. The first current is measured to produce a first current value and the second current is measured to produce a second current value. The first value and the second value are processed in combination to produce a property value indicating a property of the mechanical interaction. US20050275634 A1 discloses a resistive touch panel that includes a first plurality of stripes of a resistive coating on a front sheet running in a first direction and a second plurality of stripes of a resistive coating on a back sheet running in a second direction. The overlapping regions between the first and second plurality of stripes are scanned by a controller circuit to detect voltage drops at these regions.

SUMMARY

For solving the problems that the manufacturing method of the touch screen is difficult, the driving method of the touch screen is complex, and the numbers of the touch points simultaneously determined is less, a positioning method of a touch screen having simple manufacturing method, driving method and capable of multi-touch operation is necessarily provided.

According to a first aspect of the present invention, a positioning method for a touch screen is provided as defined in the appended claim 1.

Compared with the conventional technology, the touch screen applying the abovementioned positioning method uses a material having an anisotropic impedance, particularly uses a conductive polymer material or a carbon nanotube material, and more particularly uses the carbon nanotube film having a preferred orientation arrangement to fabricate the conductive layer so that the positioning method has the following advantages: the first, the resistivity of the carbon nanotube film having the preferred orientation arrangement has an anisotropic characteristic so that the real coordinate of the touch point can be determined according to the position where the voltage is reduced and the reducing magnitude of the voltage through measuring the voltages of the sides of the carbon nanotube film. Therefore, the touch screen has simple physical structure and simple driving method. The second, the carbon nanotube film are divided into a plurality of conductive channels extending along the extending direction of the carbon nanotubes. Different detecting electrodes are disposed repectively corresponding to different conductive channels so that the touch screen accomplishes multi-touch operation according to the voltage variance in each conductive channel. In addition, in theory, the numbers of the touch points are not restricted so as to truly achieve the multi-touch function. The third, the superior mechanical property of the carbon nanotubes renders the carbon nanotube film have high tenacity and mechanical strength. Therefore, it is conducive to improve the durability of the touch screen by using the carbon nanotube film as the conductive layer. The fourth, the carbon nanotube film has desirable conductivity so as to enhance the conductive property of the touch screen and further enhance the resolution and the accuracy thereof The fifth, the carbon nanotube film has good transparency of light so that the touch screen has desirable optical property.

In the aforesaid touch screen, a positioning method of the touch screen called three-points interpolation algorithm is provided by using the three voltages obtained through measuring the voltage variances of the detecting electrodes and selecting the relative extreme voltage and the voltages closest to the relative extreme voltage, which is capable of accurately determining the coordinate of any point on the touch screen and has high precision.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

Fig. 1 is a schematic cross-sectional structure of a touch screen according to a first non-claimed embodiment of the disclosure.

Fig. 2 is a schematic plane structure of the first transmitting layer and the second transmitting layer in the touch screen illustrated in Fig. 1.

Fig. 3 is the voltage curve diagram of the detecting electrodes in the touch screen illustrated in Fig. 1 when the touch screen is not touched.

Fig. 4 is a schematic diagram showing the real position of the touch points when a three points operation is performed on the touch screen illustrated in Fig. 1.

Fig. 5 is the voltage curve diagram of the detecting electrodes in the touch screen illustrated in Fig. 4 when the three points operation is performed.

Fig. 6 is a schematic plane structure of the first transmitting layer and the second transmitting layer in a touch screen according to a second embodiment of the disclosure.

Fig. 7 is a schematic diagram showing the measured voltages according to a first example when the touch screen illustrated in Fig. 6 applies a three-points interpolation algorithm to determine the touch point.

Fig. 8 is a schematic diagram showing the measured voltages according to a second example when the touch screen illustrated in Fig. 6 applies a three-points interpolation algorithm to determine the touch point.

Fig. 9 is a schematic diagram which shows the regions of the touch screen illustrated in Fig. 6 when the touch screen is divided into several regions for determining the coordinates of the touch points.

DETAILED DESCRIPTION

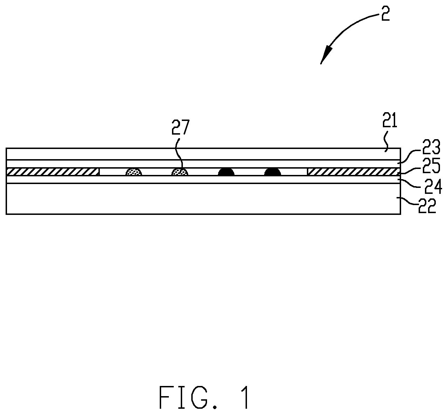

Fig. 1 is a schematic cross-sectional structure of a touch screen 2 according to a first non-claimed embodiment of the disclosure. The touch screen 2 includes a first substrate 21 and a second substrate 22 disposed opposite to each other. The first substrate 21 is generally fabricated by an elastic material, and the second substrate 22 is made by a rigid material to sustain certain pressure. In the present embodiment, the first substrate 21 is a polyester film, and the second substrate 22 is a glass substrate. A first transmitting layer 23 is disposed at a surface of the first substrate 21 opposite to the second substrate 22. A second transmitting layer 24 is disposed at a surface of the second substrate 22 opposite to the first substrate 21. An adhesion layer 25 is disposed at the margin between the first substrate 21 and the second substrate 22 so that the first substrate 21 and the second substrate 22 are adhered together. A distance between the first transmitting layer 23 and the second transmitting layer 24 can range from 2 $\mu$m to 10 $\mu$m, in one embodiment, for example. A plurality of spacers 27 separated from one another are disposed between the first transmitting layer 23 and the second transmitting layer 24 for support and to electrically insulate the first transmitting layer 23 and the second transmitting layer 24 from each other at an initial state. It is understood that when the touch screen 2 is designed in a small size, only if the first transmitting layer 23 and the second transmitting layer 23 are surely electrically insulated from each other in the initial state can the spacers 27 be selectively disposed in the touch screen 2.

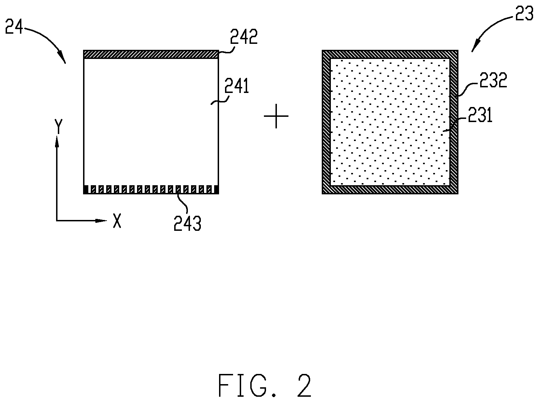

Fig. 2 is a schematic plane structure of the first transmitting layer 23 and the second transmitting layer 24. In Fig. 2, a Cartesian coordinate system including an X axis direction and a Y axis direction perpendicular to each other is introduced. The first transmitting layer 23 includes a first conductive layer 231 and a first electrodes 232. The first conductive layer 231 is a rectangular indium tin oxide thin film so as to have low resistivity and high light transparency. The first electrode 232 is continuously disposed at the four edges of the first conductive layer 231 and electrically connected to the first conductive layer 231.

The second transmitting layer 24 includes a second conductive layer 241, a second electrode 242, and a plurality of detecting electrodes $E_{11}$ to $E_{1x}$, where x is a natural number which represents the numbers of the detecting electrodes 243.

The second conductive layer 241 is a conductive film having an anisotropic impedance, i.e. the resistivity thereof is various in 2-dimensional space. Specifically, the lateral resistivity $\rho 1$ of the second conductive layer 241 along the X axis direction is larger that the longitudinal resistivity $\rho 2$ of the second conductive layer 241 along the Y axis direction.

The second electrode 242 is a stripe-like electrode which is disposed at a side of the second transparent conductive layer 241 perpendicular to the extending direction of the carbon nanotubes, i.e. the upper side of the second transparent conductive layer 241 in Fig. 2, and electrically connected to the second transparent conductive layer 241.

The detecting electrodes $E_{11}$ to $E_{1x}$ are evenly arranged at another side of the second conductive layer 241 opposite to the second electrode 242, i.e. the bottom side of the second transparent conductive layer 241 in Fig. 2, and are all electrically connected to the second conductive layer 241. Because of the anisotropic impedance of the carbon nanotube thin film, the detecting electrodes $E_{11}$ to $E_{1x}$ divides the second conductive layer 241 into a plurality of corresponding conducting channels.

In an embodiment, the second conductive layer 241 is fabricated by carbon nanotube thin film material with even thickness. A thickness of the carbon nanotube thin film can range from 0.5 nm to 100 nm, in one embodiment, for example. The carbon nanotube thin film is a layer structure with even thickness formed by orderly arranged carbon nanotubes. The carbon nanotubes are one or more combination of signal wall carbon nanotubes, dual wall carbon nanotubes, and multi wall carbon nanotubes, where a diameter of the signal wall carbon nanotubes is 0.5 nm to 50 nm, a diameter of the dual wall carbon nanotubes is 1.0 nm to 50 nm, and a diameter of the multi wall carbon nanotubes is 1.5 nm to 50 nm. The carbon nanotubes in the carbon nanotube thin film are arranged in a single preferred orientation or in a plurality of preferred orientations.

Furthermore, the second conductive layer 241 is made of one carbon nanotube thin film or overlapping carbon nanotube thin films, and the overlapping angle of the overlapping carbon nanotube thin films is not restricted here. The carbon nanotubes are orderly arranged. Moreover, the carbon nanotube thin film includes a plurality of carbon nanotubes arranged in a preferred orientation. The carbon nanotubes have substantially equivalent lengths so as to connect together through van der Waals force to form continuous carbon nanotube beams. Specifically, the carbon nanotubes in the second conductive layer 241 are arranged in a preferred orientation of the Y axis direction illustrated in Fig. 2.

The aforesaid carbon nanotubes thin film having preferred orientation arrangement has a characteristic of anisotropic impedance, i.e. the resistivity of the carbon nanotube film in the extending direction of the carbon nanotubes is much smaller than the resistivity of the carbon nanotube film in the direction perpendicular to the extending direction of the carbon nanotubes. Specifically, the lateral resistivity of the second conductive layer 241 in the X axis direction is much larger that the longitudinal resistivity of the second conductive layer 241 in the Y axis direction.

Generally, the value of $\rho 1/\rho 2$ ratio is increased along with the increasing of the size of the touch screen 2. When the size of the touch screen 2 (the diagonal of the rectangle) is smaller than 3.5 inch, the value of $\rho 1/\rho 2$ ratio is, preferredly, not smaller than 2. When the size of the touch screen 2 (the diagonal of the rectangle) is larger than 3.5 inch, the value of $\rho 1/\rho 2$ ratio is, preferredly, not smaller than 5.

Furthermore, the size of the touch screen 2 is 3.5 inch in the present embodiment and the $\rho 1/\rho 2$ ratio which represents a ratio of the lateral resistivity to the longitude resistivity of the applied carbon nanotubes is larger than and equal to 100. For example, the lateral resistivity can be 540 k$\Omega$ and the longitudinal resistivity can be 3.6 k$\Omega$.

The first electrode 232, the second electrode 242 and the detecting electrodes $E_{11}$ to $E_{1x}$ are formed by materials having low impedance, such as Al, Cu, Ag, for example., so as to reduce the attenuation of the electronic signal. In the present embodiment, they can all be made of conductive silver paste.

The driving method of the touch screen 2 is shown as follows.

During the driving method, the first electrode 232 is connected to a first voltage, and the second electrode 242 and the detecting electrodes $E_{11}$ to $E_{1x}$ are connected to a second voltage, wherein the first voltage can be higher than the second voltage and may be lower than the second voltage. The following positioning method is provided by taking an example in which the first voltage is lower than the second voltage. Specifically, the first electrode 232 is electrically connected to a ground of the touch screen system 2, i.e. the voltage of the first conductive layer 231 is zero V. The second electrode and the detecting electrodes $E_{11}$ to $E_{1x}$ are applied by a high voltage, such as 5V in the present embodiment, so that the voltage of the second conductive layer 241 is 5V. The detecting electrodes $E_{11}$ to $E_{1x}$ are used to detect the voltage variance of the second conductive layer 241 corresponding to different positions so as to provide a reference data to the positioning method.

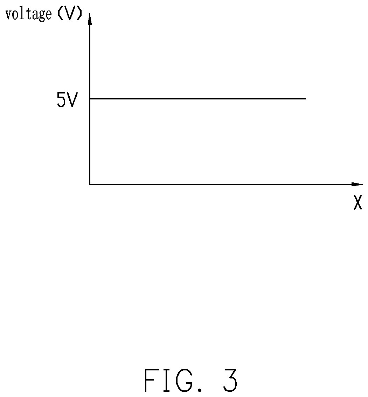

When the user does not perform any operation on the touch screen 2, the first conductive layer 231 and the second conductive layer 241 are electrically insulated from each other so that the voltage of the second conductive layer 241 is not influenced. Accordingly, the measured voltages of the detecting electrodes $E_{11}$ to $E_{1x}$ are equivalent, such as 5V. Fig. 3 being the voltage curve diagram of the detecting electrodes $E_{11}$-$E_{1x}$ in the touch screen illustrated in Fig. 1 when the touch screen is not touched is further referred to. The horizontal axis shows physical coordinates of the detecting electrodes $E_{11}$-$E_{1x}$ and the vertical axis shows the measured voltages of the detecting electrodes $E_{11}$-$E_{1x}$ in Fig. 3. Owing to the equivalence of the measured voltages of the detecting electrodes $E_{11}$-$E_{1x}$, a straight line perpendicular to the vertical axis is shown in the drawing figure.

When the user performs an operation on the touch screen 2, the first substrate 21 is curved toward the second substrate 22 under the pressure of the operation so that the first conductive layer 231 and the second conductive layer 241 are electrically connected at the touch point. If a single point is touched, a single connecting point is generated at the touch point. If multi points are touched, a plurality of connecting points are correspondingly generated. The measured voltage of one of the detecting electrodes $E_{11}$-$E_{1x}$ corresponding to the touch point is changed because the voltage of the first conductive layer 231 is lower than the voltage of the second conductive layer 241. Specifically, the voltage of the corresponding one of the detecting electrodes $E_{11}$-$E_{1x}$ is lower than the voltage of the second electrodes 241, i.e. smaller than 5V. According to an experiment, the reducing magnitude of the voltage of the corresponding detecting electrode is related to the vertical coordinate of the touch point. The closer the touch point to the second electrode 242 is, the smaller the reducing magnitude of the voltage of the detecting electrode corresponding to the touch point is. On the contrary, the farther the touch point to the second electrode 242 is, the larger the reducing magnitude of the voltage of the detecting electrode corresponding to the touch point is, that is , the voltage of the detecting electrode corresponding to the touch point is positively related to the distance from the touch point to the second electrode 242.

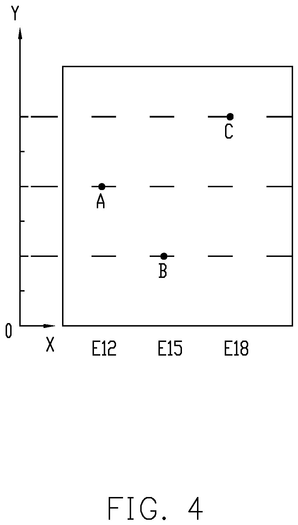

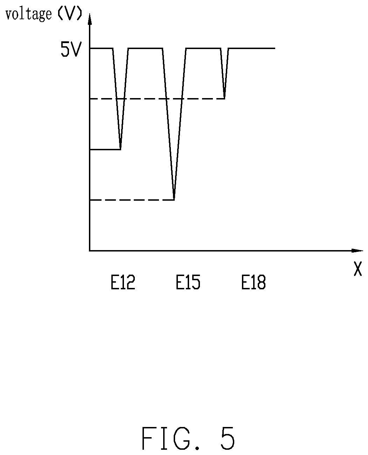

Fig. 4 and Fig. 5 are simultaneously referred to, wherein Fig. 4 is a schematic diagram showing the coordinates of the touch points in a three points operation performed on the touch screen illustrated in Fig. 1 and Fig. 5 is the voltage curve diagram of the detecting electrodes in the touch screen illustrated in Fig. 4 when the three points operation is performed. The real positions of three touch points A, B, C simultaneously performed on the touch screen 2 is shown in Fig. 4, and the positions of the detecting electrodes E12, E15, E18 are respectively corresponding to the three touch points A, B, C. The horizontal axis shows the horizontal coordinates of the detecting electrodes $E_{11}$-$E_{1x}$ and the vertical axis shows the measured voltages of the detecting electrodes $E_{11}$-$E_{1x}$ in Fig. 5. As shown in the figures, the voltages of the three detecting electrodes E12, E15, and E18 have various reducing magnitudes, respectively.

Based on the positions of the reduced voltages in the voltage curve in the coordinate, the detecting electrodes E12, E15, and E18 can be directly served as the detecting electrodes corresponding to the three touch points A, B, and C. The horizontal coordinates of the detecting electrodes E12, E15, and E18 can thus be considered as the horizontal coordinates of the three touch points. Furthermore, based on the reducing magnitudes of the voltages of the three detecting electrodes E12, E15, and E18, the distances from the three touch points to the detecting electrodes $E_{11}$-$E_{1x}$ can be analyzed so as to obtain the vertical coordinates of the touch points. By the above method, the coordinates of all touch points on the touch screen can be determined.

The touch screen 2 applying the carbon nanotube film has the following advantages: the first, the resistivity of the carbon nanotube film having the preferred orientation arrangement has an anisotropic characteristic so that the coordinate of the touch point can be determined through measuring the voltages of the detecting electrodes $E_{11}$-$E_{1x}$ and referring to the location where the voltage is reduced and the magnitude how the voltage is reduced. Therefore, the touch screen 2 has simple physical structure and simple driving method. The second, the carbon nanotube film are divided into a plurality of conductive channels extending along the extending direction of the carbon nanotubes. Different detecting electrodes E1-Ex are corresponding to different conductive channels so that the touch screen 2 accomplishes multi-touch operation. In addition, in theory, the numbers of the touch points are not restricted so as to truly achieve the multi-touch function. The third, the superior mechanical property of the carbon nanotube renders the carbon nanotube layer have high tenacity and mechanical strength. Therefore, it is conducive to improve the durability of the touch screen 2 by using the carbon nanotube layer as the conductive layer. The fourth, the carbon nanotube film has desirable conductivity so as to enhance the conductive property of the touch screen and further enhance the resolution and the accuracy thereof. The fifth, the carbon nanotube film has good transparency of light so that the touch screen has desirable optical property.

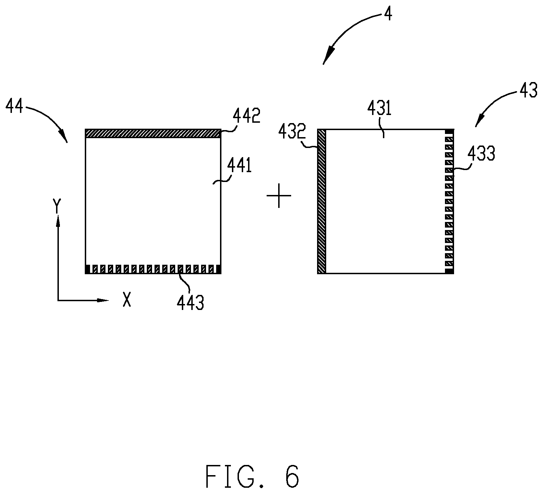

Fig. 6 is a schematic plane structure of the first transmitting layer 43 and the second transmitting layer 44 according to a second embodiment of the disclosure. The drawing figure merely shows the plane structures of a first transmitting layer 43 and a second transmitting layer 44. The touch screen 4 is similar to the touch screen 2 of the first non-claimed embodiment, and the difference lies in that the structure of the first transmitting layer 43 is similar to the second transmitting layer 44. The first transmitting layer 43 includes a first conductive layer 431 made of a carbon nanotube thin film, a stripe-like first electrode 432, and a plurality of first detecting electrodes $E_{21}$-$E_{2y}$, where y is a natural number representing the numbers of the first detecting electrodes. The second transmitting layer 44 includes a second conductive layer 441 made of a carbon nanotube thin film, a stripe-like second electrode 442, and a plurality of second detecting electrodes $E_{11}$ to $E_{1x}$, where x is a natural number which represents the numbers of the second detecting electrodes. In addition, the carbon nanotubes in the first conductive layer 431 are extended along the X axis direction of the coordinate. The first electrode 432 is disposed at the left side of the first transparent conductive layer 431, extended along the Y axis direction, and electrically connected to the first transparent conductive layer 431. The first detecting electrodes E21-E2y are evenly arranged at the right side of the first conductive layer 431 opposite to the first electrode 432 and electrically connected to the first conductive layer 431. The resistivity p3 of the first conductive layer 431 in the Y axis direction is larger than the resistivity p4 of the first conductive layer 431 in the X axis direction, and the value of p3/p4 ratio is increased along with the increasing of the size of the first conductive layer 431 in the Y axis direction.

The driving method of the touch screen 4 includes the following steps. The first electrode 432 and the first detecting electrodes $E_{21}$-$E_{2y}$ are connected to a ground voltage, and the second electrode 442 and the second detecting electrodes $E_{11}$-$E_{1x}$ are connected to a high voltage such as 5V in the present embodiment when measuring the horizontal coordinate of the touch point. The horizontal coordinate of the touch point is determined by respectively measuring the voltages of the second detecting electrodes $E_{11}$-$E_{1x}$. The voltages of the first detecting electrodes $E_{21}$-$E_{2y}$ are respectively measured to determine the vertical coordinate of the touch point when measuring the vertical coordinate of the touch point.

In the positioning method for the touch screen 4, the horizontal coordinate and the vertical coordinate of the touch point are determined by applying a low voltage to the first electrode 432 and the first detecting electrodes $E_{21}$-$E_{2y}$, applying a high voltage to the second electrode 442 and the second detecting electrodes $E_{11}$-$E_{1x}$, and respectively measuring the voltage variances of the first detecting electrodes $E_{21}$-$E_{2y}$ and the second detecting electrodes $E_{11}$-$E_{1x}$. Therefore, the reducing magnitude of the voltage is not required to be analyzed. The driving method is more simple and accurate.

Further, in addition to using the carbon nanotube film to serve as the conductive layer in the above embodiment, other material having an anisotropic impedance, such as conductive polymer materials, certain crystalline materials having low dimensional characteristics (one dimension or two dimensions) can also be used to form the conductive layer. In the above mentioned crystalline materials having low dimensional characteristics (one dimension or two dimensions), the electrons of the material are restricted to conduct in a one-dimensional linearity or in a two-dimension plane. Therefore, the conductivity of the crystalline materials is superior in one or two specific lattice direction and significantly reduced in other directions so that the crystalline material has an anisotropic impedance that is also called an anisotropy of conductivity. These materials comply with the requirement of the conductive layer having anisotropy of conductivity in the disclosure and facilitates the same or similar effect mentioned in the above embodiments.

Nevertheless, the above driving method is used to accurately determine the coordinate of the touch point when the touch point is right located at the horizontal line where any of the first detecting electrode $E_{21}$-$E_{2y}$ is located, or the vertical line where any of the second detecting electrode $E_{11}$-$E_{1x}$ is located. When the touch point is located at the midpoint between any two of the first detecting electrodes $E_{21}$-$E_{2y}$ or the midpoint between any two of second detecting electrodes $E_{11}$-$E_{1x}$, the accurate position of the touch point is obtained by calculating the known measured voltages in an interpolation algorithm.

A calculating method called three-points interpolation algorithm is detailed introduced in the following. The calculating method can be used to accurately determine the coordinate of any point in the touch screen 4, and herein the positioning method of the horizontal coordinate of the calculating method is detailed depicted as an example.

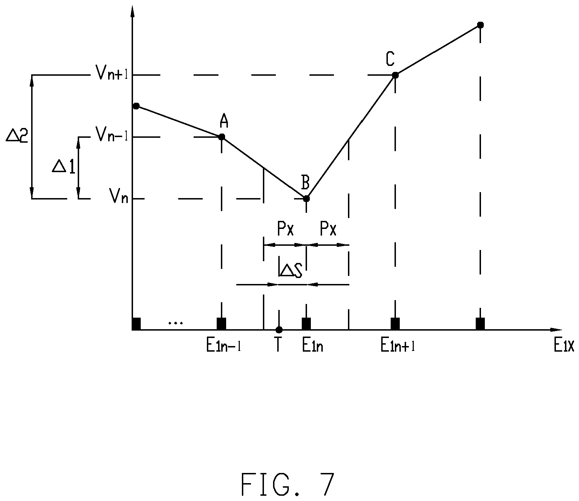

Fig. 7 is a schematic diagram showing the measured voltages according to a first example when a three-points interpolation algorithm is used to determine the touch point. The horizontal axis shows the second detecting electrodes $E_{11}$-$E_{1x}$ and the horizontal coordinates thereof in Fig. 7. The vertical axis shows the output voltages of the second detecting electrodes $E_{11}$-$E_{1x}$ in Fig. 7. For clearly showing the voltage variance of the touch point, only the measured voltages of the touch point and the neighbor points close to the touch point are illustrated in the drawing figure. The point T is the relative position of the touch point in the horizontal axis of the touch screen 4. The point B is the minimum voltage in the measured voltage curve diagram, Xn is the horizontal coordinate of the second detecting electrode $E_{1n}$ providing the minimum voltage, and $2 \leq n \leq x-1$. The point A and the point C are the measured voltages corresponding to the second detecting electrodes $E_{1n-1}$ and $E_{1n+1}$ closest to the second detecting electrode $E_{1n}$ providing the minimum voltage in the left side and the right side. The voltages of the points A, B, and C are respectively $V_{n-1}$, $V_n$, and $V_{n+1}$, where $V_{n-1} \geq V_n$ and $V_{n+1} \geq V_n$.

A normal value Px and a variable ΔS are configured, where the value of Px is a half of the distance of any adjacent two of the second detecting electrodes $E_{11}$-$E_{1x}$, and the value of ΔS is equal to the lateral distance from the touch point T to the closest second detecting electrode $E_{1n}$. The relationships of ΔS to $V_{n-1}$, $V_n$, and $V_{n+1}$ satisfy the following set of equations.

$$\Delta S = f\left(\Delta 1, \Delta 2\right)$$
$$\Delta 1 = \left|V_{n-1} - V_n\right| \qquad\qquad (1)$$
$$\Delta 2 = \left|V_{n+1} - V_n\right|$$

Furthermore, the set of equations 1 can be specifically shown as:

$$\begin{cases} \Delta 1 > \Delta 2 \Rightarrow \Delta S = P_x \times \dfrac{\Delta 1 - \Delta 2}{\Delta 1} \\[2mm] \Delta 1 = \Delta 2 \Rightarrow \Delta S = 0 \\[2mm] \Delta 1 < \Delta 2 \Rightarrow \Delta S = P_x \times \dfrac{\Delta 1 - \Delta 2}{\Delta 2} \end{cases} \qquad\qquad (2)$$

and

$$Xt = Xn + \Delta S \qquad\qquad (3)$$

where Xt is the horizontal coordinate of the touch point, the position Xt of touch point is a function taking any two of $(V_{n-1}-V_{n+1})$, $(V_{n+1}-V_n)$, and $(V_{n-1}-V_n)$ as the variables when the Vn is the minimum voltage. Xn is the horizontal coordinate of the second detecting electrode $E_{1n}$.

Therefore, the following set of equations is obtained by combining the sets of equations (1), (2), and (3):

$$\begin{cases} V_{n-1} < V_{n+1} \Rightarrow Xt = Xn + P_x \times \dfrac{V_{n-1} - V_{n+1}}{V_{n+1} - V_n} \\[2mm] V_{n-1} = V_{n+1} \Rightarrow Xt = Xn \\[2mm] V_{n-1} > V_{n+1} \Rightarrow Xt = Xn + P_x \times \dfrac{V_{n-1} - V_{n+1}}{V_{n-1} - V_n} \end{cases} \qquad\qquad (4)$$

The calculation method of the three particular points are described in the following.
When $\Delta 1 \approx 0$; $\Delta 2 \neq 0$, $\Delta S \approx -P_x$ and $Xt \approx X_n - P_x$.

That means that the touch point is close to the midline between the second detecting electrode $E_{1n-1}$ and the second detecting electrode $E_{1n}$, and the horizontal coordinate thereof is close to Xn-Px.
When $\Delta 1 = \Delta 2$, $\Delta S = 0$ and $Xt \approx Xn$.

Thus, the touch point is close to the position corresponding to the detecting electrode En, and the horizontal coordinate thereof is close to Xn.
When $\Delta 1 \neq 0$; $\Delta 2 \approx 0$, $\Delta S \approx +P_x$ and $Xt \approx Xn + P_x$.

That means that the touch point is close to the midline between the second detecting electrode $E_{1n}$ and the second detecting electrode $E_{1n+1}$, and the horizontal coordinate thereof is close to Xn+Px.

The above three conditions satisfy the experimental analog calculation, which shows that the set of equations (2) satisfies description of the position of the touch point T. Therefore, the position of any point in the horizontal axis of the touch screen 4 can be precisely positioned by using the above set of equations (4).

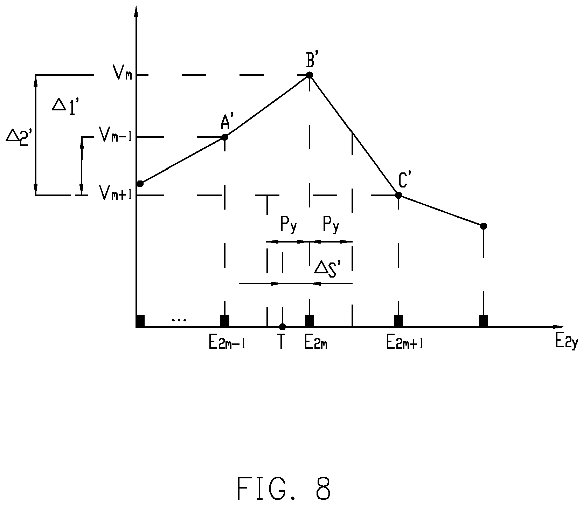

Fig. 8 is a schematic diagram showing the measured voltages according to a second example when the touch screen applies a three-points interpolation algorithm to determine the touch point. Base on the same principle, the voltage at the touch point measured by the first detecting electrodes $E_{21}$~$E_{2y}$ is the maximum voltage in the present example, and the drawing figure only shows the measured voltage of the touch point for clearly directing to the voltage variation of the touch point. The point T is the relative position of the touch point in the vertical axis of the touch screen 4. The point B' is the maximum voltage in the measured voltage curve which is corresponding to the first detecting electrode $E_{2m}$, and $2 \leq m \leq y-1$. The point A' and the point C' are the measured voltages corresponding to the first detecting electrodes $E_{2m-1}$ and $E_{2m+1}$ most adjacent to the first detecting electrode $E_{2m}$ providing the maximum voltage in the left side and the right side. The voltages of the points A, B, and C are respectively $V_{m-1}'$, $V_m'$, and $V_{m+1}$, where $V_{m-1}' \geq Vm'$ and $V_{m+1}' \geq Vm'$.

A normal value Py and a variable $\Delta S'$ are configured, where the value of Py is a half of the distance of any adjacent two of the first detecting electrodes $E_{21}$-$E_{2y}$ and the value of $\Delta S'$ is equal to the lateral distance from the touch point T to the closest first detecting electrode $E_{2m}$. The relationships of $\Delta S'$ to $V_{m-1}'$, $V_m'$, and $V_{m+1}'$ satisfy the following set of equations.

$$
\begin{aligned}
\Delta S' &= f\left(\Delta 1', \Delta 2'\right) \\
\Delta 1' &= \left| V_{m-1}' - V_m' \right| \\
\Delta 2' &= \left| V_{m+1}' - V_m' \right|
\end{aligned}
\qquad (5)
$$

Furthermore, the set of equations 5 can be specifically shown as:

$$
\left\{
\begin{aligned}
\Delta 1' > \Delta 2' &\Rightarrow \Delta S' = Py \times \frac{\Delta 1' - \Delta 2'}{\Delta 1'} \\
\Delta 1' = \Delta 2' &\Rightarrow \Delta S' = 0 \\
\Delta 1' < \Delta 2' &\Rightarrow \Delta S' = Py \times \frac{\Delta 1' - \Delta 2'}{\Delta 2'}
\end{aligned}
\right.
\qquad (6)
$$

and

$$
Yt = Ym + \Delta S'
\qquad (7)
$$

where Yt is the vertical coordinate of the touch point, when the Vm is the maximum voltage, the position Yt of touch point is a function taking any two of $(V_{m-1}-V_{m+1})$, $(V_{m+1}-V_m)$, and $(V_{m-1}-V_m)$ as variables. Ym is the vertical coordinate of the first detecting electrode $E_{2m}$.

Therefore, the following set of equations is obtained by combining the sets of equations (5), (6), and (7):

$$
\left\{
\begin{aligned}
V_{m-1} > V_{m+1} &\Rightarrow Yt = Ym + P_y \times \frac{V_{m-1} - V_{m+1}}{V_{m+1} - V_m} \\
V_{m-1} = V_{m+1} &\Rightarrow Yt = Ym \\
V_{m-1} < V_{m+1} &\Rightarrow Yt = Ym + P_y \times \frac{V_{m-1} - V_{m+1}}{V_{m-1} - V_m}
\end{aligned}
\right.
\qquad (8)
$$

The calculation method of three particular points are described in the following.

When $\Delta 1' \approx 0$; $\Delta 2' \neq 0$, $\Delta S' \approx -P_y$ and $Yt \approx Ym - P_y$.

That means that the touch point is close to the midline between the first detecting electrode $E_{2m-1}$ and the first detecting electrode $E_{2m}$, and the vertical coordinate thereof is close to Ym-Py.

When $\Delta 1' = \Delta 2'$, $\Delta S' = 0$ and $Yt \approx Ym$.

Thus, the touch point is close to the position corresponding to the first detecting electrode $E_{2m}$, and the vertical coordinate thereof is close to $Y_m$.

When $\Delta 1' \neq 0$; $\Delta 2' \approx 0$, $\Delta S' \approx + P_y$ and $Yt \approx Ym + P_y$.

That means that the touch point is close to the midline between the first detecting electrode $E_{2m}$ and the first detecting electrode $E_{2m+1}$, and the vertical coordinate thereof is close to Ym+Py.

The above three conditions satisfy the experimental analog calculation, which shows that set of the equations (6) satisfies description of the position of the touch point T. Therefore, the position of any point in the vertical axis of the touch screen 4 can be precisely positioned by using the above set of equations (8).

The position of any point in the touch screen can be further accurately positioned by using the abovementioned algorithm.

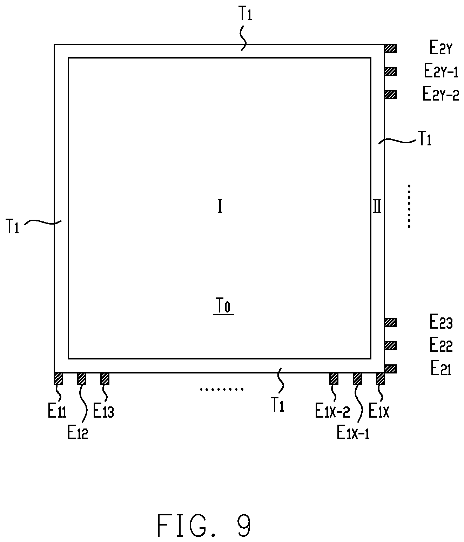

Fig. 9 is a schematic diagram which shows the regions of the touch screen when the touch screen is divided into several regions for determining the positions of the touch points. The touch screen 4 is divided into two regions which are respectively the middle region I and the periphery region II, wherein the middle region I includes the regions separated from the horizontal edges by a distance larger than or equal to Py and separated from the vertical edges by a distance larger than or equal to Px. The periphery region II includes all the regions separated from the horizontal edges by a distance smaller than Py and separated from the vertical edges by a distance smaller than Px. Herein, the values of Px and Py are referred to the aforesaid definition.

When the touch point such as the touch point T0 is located at the middle region I, the position of the touch point can be positioned by using the abovementioned equations (4) and (8).

When the touch point is located at the periphery region II, the coordinate of the touch point satisfies the following equations.

The measured relative extreme voltage from the voltages of the second detecting electrodes is the minimum voltage and the measured relative extreme voltage from the voltages of the first detecting electrodes is the maximum voltage when the first voltage is higher than the second voltage.

If the touch point $T_1$ is located between $E_{11}$ and $E_{11}+P_x$, the detecting electrode $E_{11}$ is closest to the touch point and only the detecting electrode $E_{12}$ is the second closet to the touch point in the horizontal axis direction.

In respect of the horizontal coordinate:

The position Xt of the touch point is a function taking as a variable when $V_1$ is the minimum voltage, and the position Xt of the touch point satisfies the following equations:

$$Xt = X1 + P_x - P_x \times \frac{V_2 - V_1}{V_R - V_1} \quad ,$$

$V_R$ is a reference voltage, where $V_R > V_2 > V_1$.

If the touch point $T_1$ is located between $E_{1x}$ and $E_{1x}-P_x$, the detecting electrode $E_{1x}$ is closest to the touch point and only the detecting electrode $E_{1x-1}$ is the second closet to the touch point in the horizontal axis direction. Herein, the position Xt of the touch point is a function taking $(V_{x-1}-V_x)$ as a variable when $V_x$ is the minimum voltage, and the coordinate of the touch point satisfies the following equations:

$$Xt = Xx - P_x + P_x \times \frac{V_{x-1} - V_x}{V_R - V_x} \quad ,$$

$V_R$ is a reference voltage, where $V_R > V_{x-1} > V_x$.

The coordinate $Y_t$ satisfies the abovementioned set of equations (8).

If the touch point $T_1$ is located between $E_{21}$ and $E_{21}+P_y$, the detecting electrode $E_{21}$ is closest to the touch point and only the detecting electrode $E_{22}$ is the second closet to the touch point in the vertical axis direction.

In respect of the vertical coordinate:

The position Yt of the touch point is a function taking $(V_1'-V_2')$ as a variable when $V_1$ is the maximum voltage, and the position Yt of the touch point satisfies the following equations:

$$Yt = Y_1 + P_y - P_y \times \frac{V_1' - V_2'}{V_1' - V_R'} ,$$

$V_R'$ is a reference voltage, where $V_1' > V_2' > V_R'$.

If the touch point $T_1$ is located between $E_{2y}$ and $E_{2y}-P_y$, the detecting electrode $E_{2y}$ is closest to the touch point and only the detecting electrode $E_{2y-1}$ is the second closet to the touch point in the vertical axis direction. Herein, the position Yt of the touch point is a function taking $(V_y'-V_{y-1}')$ as a variable when $V_y'$ is the maximum voltage, and the coordinate of the touch point satisfies the following equations:

$$Yt = Yy - P_y + P_y \times \frac{V_y{}' - V_{y-1}{}'}{V_y{}' - V_R{}'},$$

$V_R$' a reference voltage, where $V_y$'>$V_{y-1}$'>$V_R$'.

The coordinate Xt satisfies the abovementioned set of equations (4).

The steps of all the methods described above will be performed by signal processing circuitry included in a touch screen device incorporating the panel, or by separate circuitry. Circuitry in this context includes analogue and digital circuitry. Digital circuitry may be special purpose hardware and/or may include programmable DSP or microprocessor circuitry, provided with suitable program instructions.

It will be apparent to those skilled in the art that various modifications and variations can be made to the present disclosure without departing from the scope of the present invention. In view of the foregoing, it is intended that the present invention covers these modifications and variations provided they fall within the scope of the following claims and their equivalents. Any of the embodiments or any of the claims of the present invention does not need to achieve all of the advantages or features disclosed by the present disclosure. Moreover, the abstract and the headings are merely used to aid in searches of patent files and are not intended to limit the scope of the claims of the present invention.

**Claims**

1. A positioning method for a touch screen (4), comprising:

   providing the touch screen (4) comprising a first transmitting layer (43) and a second transmitting layer (44) disposed opposite each other;

   providing the first transmitting layer (43) comprising a first conductive layer (431), a first electrode (432) in the shape of a stripe and disposed at a side of the first conductive layer (431) and a plurality of separated first detecting electrodes (433) disposed at another side of the first conducting layer (431) opposite to the first electrode (432), wherein the first electrode (432) extends along a Y axis direction of the touch screen, and the resistivity of the first conductive layer (431) in the Y axis direction is larger than the resistivity of the first conductive layer in an X axis direction of the touch screen;

   providing the second transmitting layer (44) comprising a second conductive layer (441), a second electrode (442) in the shape of a stripe and disposed at a side of the second conductive layer (441) and a plurality of separated second detecting electrodes (443) disposed at another side of the second conductive layer (441) perpendicular to the first detecting electrodes (433), and each of the first conductive layer (431) and the second conductive layer (441) having anisotropic impedance, the first detecting electrodes (433) being arranged along the Y axis direction;

   wherein the second electrode (442) extends along the X axis direction, and the resistivity of the second conductive layer (441) in the X direction is larger than the resistivity of the second conductive layer in the Y axis direction;

   providing a first voltage to the first conductive layer (431);

   providing a second voltage to the second conductive layer (441) wherein a contact between the first conductive layer (431) and the second conductive layer (441) is defined as a touch point;

   **characterised by** measuring voltages of the first detecting electrodes (433), selecting the relative extreme voltage from the voltages of the first detecting electrodes (433) and further selecting the voltage of the first detecting electrode (433) closest to the relative extreme voltage from the voltages of the first detecting electrodes (433), and determining a vertical coordinate of the touch point according to the relative extreme voltage from the voltages of the first detecting electrodes (433) and further determining the voltage of the first detecting electrode (433) closest to the electrode having the relative extreme voltage ; and

   measuring voltages of the second detecting electrodes (443), selecting the relative extreme voltage from the voltages of the second detecting electrodes (443) and further selecting the voltage of the second detecting electrode (443) closest to the relative extreme voltage from the voltages of the second detecting electrodes (443), and determining a horizontal coordinate of the touch point according to the relative extreme voltage from the voltages of the second detecting electrodes (443) and further determining the voltage of the second detecting electrode (443) closest to the electrode having the relative extreme voltage.

2. The positioning method of claim 1, wherein the first detecting electrodes are evenly arranged along the Y axis direction and are defined as $E_{21}$ to $E_{2y}$, the voltages respectively corresponding to the first detecting electrodes $E_{21}$ to $E_{2y}$ are defined as $V_1$' to $V_y$', coordinates of the first detecting electrodes are defined as $Y_1$ to $Y_y$, a distance between any adjacent two of the first detecting electrodes is defined as 2Py, $V_m$' is the relative extreme voltage from the voltages of the first detecting electrodes, the first detecting electrode providing the relative extreme voltage is defined as $E_{2m}$, $2\leqq m\leqq y-1$, the two first detecting electrodes closest to the first detecting electrode providing the relative extreme voltage are defined as $E_{2m-1}$ and $E_{2m+1}$, and the coordinate of the touch point in the arrangement direction of the first detecting electrodes is Yt.

3.  The positioning method of claim 2, wherein the relative extreme voltage from the voltages of the first detecting electrodes (433) is a maximum voltage and the relative extreme voltage from the voltages of the second detecting electrodes (443) is a minimum voltage when the first voltage is lower than the second voltage.

4.  The positioning method of claim 3, wherein the coordinate Yt of the touch point satisfies an equation when $V_1'$ is the minimum voltage:

$$Yt = Y1 + P_y - P_y \times \frac{V_1'-V_2'}{V_1'-V_R'} \, ,$$

$V_R'$ is a reference voltage, where $V_R'>V_2'>V_1'$.

5.  The positioning method of claim 3 or 4, wherein the coordinate Yt of the touch point satisfies an equation when $V_y'$ is the minimum voltage:

$$Yt = Yy - P_y + P_y \times \frac{V_y'-V_{y-1}'}{V_y'-V_R'} \, ,$$

$V_R'$ is a reference voltage, where $V_R'>V_{y-1}'>V_y'$.

6.  The positioning method of claim 3, 4 or 5, wherein the coordinate Yt of the touch point satisfies a set of equations when $V_m'$ is the minimum voltage and $2 <m<y-1$:

$$\begin{cases} V_{m-1}'< V_{m+1}' \Rightarrow Yt = Ym + P_y \times \dfrac{V_{m+1}'-V_{m-1}'}{V_m'-V_{m+1}'} \\ V_{m-1}'= V_{m+1}' \Rightarrow Yt = Ym \\ V_{m-1}'> V_{m+1}' \Rightarrow Yt = Ym + P_y \times \dfrac{V_{m+1}'-V_{m-1}'}{V_m'-V_{m-1}'} \end{cases} .$$

7.  The positioning method of claim 2, wherein:

the relative extreme voltage from the voltages of the first detecting electrodes (433) is a minimum voltage and the relative extreme voltage from the voltages of the second detecting electrodes (443) is a maximum voltage when the first voltage is higher than the second voltage.

8.  The positioning method of claim 7, wherein the coordinate Yt of the touch point satisfies an equation when $V_1'$ is the maximum voltage:

$$Yt = Y1 + P_y - P_y \times \frac{V_1'-V_2'}{V_1'-V_R'} \, ,$$

$V_R'$ is a reference voltage, where $V_1'>V_2'>V_R'$.

9.  The positioning method of claim 7 or 8, wherein the coordinate Yt of the touch point satisfies an equation when $V_y'$

is the maximum voltage:

$$Yt = Yy - P_y + P_y \times \frac{V_y{}' - V_{y-1}{}'}{V_Y{}' - V_R{}'},$$

$V_R{}'$ is a reference voltage, where $V_y{}' > V_{y-1}{}' > V_R{}'$.

10. The positioning method of claim 7, 8 or 9, wherein the coordinate Yt of the touch point satisfies a set of equations when $V_m{}'$ is the maximum voltage and $2 < m < y-1$:

$$\begin{cases} V_{m-1}{}' < V_{m+1}{}' \Rightarrow Yt = Ym + P_y \times \dfrac{V_{m+1}{}' - V_{m-1}{}'}{V_m{}' - V_{m-1}{}'} \\[2mm] V_{m-1}{}' = V_{m+1}{}' \Rightarrow Yt = Ym \\[2mm] V_{m-1}{}' > V_{m+1}{}' \Rightarrow Yt = Ym + P_y \times \dfrac{V_{m+1}{}' - V_{m-1}{}'}{V_m{}' - V_{m+1}{}'} \end{cases}.$$

11. The positioning method of any of claims 1 to 10, wherein the first conductive layer (431) and the second conductive layer (441) are carbon nanotube films, and main conductive directions of the first conductive layer (431) and the second conductive layer (441) are perpendicular to each other.

12. The positioning method of any of claims 1 to 11, wherein the first electrode (432) is disposed at a side of the first conductive layer (431) opposite to the first detecting electrodes (433), the first voltage is provided to the first conductive layer (431) through the first electrode (432), the second electrode (442) is disposed at a side of the second conductive layer (441) opposite to the second detecting electrodes (443), and the second voltage is provided to the second conductive layer (441) through the second electrode (442).

13. The positioning method of claim 12, wherein the extended direction of the first electrode (432) and the arrangement direction of the first detecting electrodes (433) are perpendicular to a main conducting direction of the first conductive layer (431), and the extended direction of the second electrode (442) and the arrangement direction of the second detecting electrodes (443) are perpendicular to a main conducting direction of the second conductive layer (441).

14. The positioning method of claim 12 or 13, wherein the first voltage is provided to the non-measured first detecting electrodes when the first detecting electrodes (433) are sequentially measured.

15. The positioning method of claim 12, 13 or 14, wherein the second voltage is provided to the non-measured second detecting electrodes when the second detecting electrodes (443) are sequentially measured.


**Patentansprüche**

1. Positionierungsverfahren für einen Berührungsbildschirm (4), welches umfasst:

Bereitstellen des Berührungsbildschirms (4), der eine erste Übertragungsschicht (43) und eine zweite davon abgewandt angeordnete Übertragungsschicht (44) aufweist;
Bereitstellen der ersten Übertragungsschicht (43), die umfasst, eine erste Leitschicht (431), eine erste Elektrode (432) in Form eines Streifens und an einer Seite der ersten Leitschicht (431) angeordnet, und mehrere getrennte erste Erfassungselektroden (433), die an einer anderen Seite der ersten Leitschicht (431) abgewandt von der ersten Elektrode (432) angeordnet sind, worin sich die erste Elektrode (432) entlang einer Y-Achsen-Richtung des Berührungsbildschirms erstreckt, und worin der spezifische Widerstand der ersten Leitschicht (431) in der Y-Achsen-Richtung größer ist als der spezifische Widerstand der ersten Leitschicht in einer X-Achsen-Richtung des Berührungsbildschirms;
Bereitstellen der zweiten Übertragungsschicht (44), die umfasst, eine zweite Leitschicht (441), eine zweite Elektrode (442) in Form eines Streifens und an einer Seite der zweiten Leitschicht (441) angeordnet, und mehrere getrennte zweite Erfassungselektroden (443), die an einer anderen Seite der zweiten Leitschicht (441) senkrecht zu den ersten Erfassungselektroden (433) angeordnet sind, und worin jede der ersten Leitschicht (431) und der zweiten Leitschicht (441) eine anisotrope Impedanz aufweist, worin die ersten Erfassungselektroden (433) entlang der Y-Achsen-Richtung angeordnet sind;

worin sich die zweite Elektrode (442) entlang der X-Achsen-Richtung erstreckt, und worin der spezifische Widerstand der zweiten Leitschicht (441) in der X-Richtung größer ist als der spezifische Widerstand der zweiten Leitschicht in der Y-Achsen-Richtung;

Anlegen einer ersten Spannung an der ersten Leitschicht (431);

Anlegen einer zweiten Spannung an der zweiten Leitschicht (441) worin ein Kontakt zwischen der ersten Leitschicht (431) und der zweiten Leitschicht (441) als Berührungspunkt definiert wird;

**gekennzeichnet durch** Messen von Spannungen der ersten Erfassungselektroden (433), Wählen der relativen extremen Spannung aus den Spannungen der ersten Erfassungselektroden (433) und weiter Wählen der Spannung der erste Erfassungselektrode (433) nächst zu der relativ extremen Spannung aus den Spannungen der ersten Erfassungselektroden (433), und Bestimmen einer vertikalen Koordinate des Berührungspunkts gemäß der relativ extremen Spannung unter den Spannungen der ersten Erfassungselektroden (433) und weiter Bestimmen der Spannung der ersten Erfassungselektrode (433) nächst zu der Elektrode mit der relativ extremen Spannung; und

Messen von Spannungen der zweiten Erfassungselektroden (443), Wählen der relativ extremen Spannung aus den Spannungen der zweiten Erfassungselektroden (443) und weiter Wählen der Spannung der zweiten Erfassungselektrode (443) nächst zu der relativ extremen Spannung aus den Spannungen der zweiten Erfassungselektroden (443), und Bestimmen einer horizontalen Koordinate des Berührungspunkts gemäß der relativ extremen Spannung aus den Spannungen der zweite Erfassungselektroden (443) und weiter Bestimmen der Spannung der zweiten Erfassungselektrode (443) nächst zu der Elektrode mit der relativ extremen Spannung.

2. Positionierungsverfahren nach Anspruch 1, wobei die ersten Erfassungselektroden entlang der Y-Achsen-Richtung gleich verteilt und als $E_{21}$ bis $E_{2y}$ definiert sind, worin die Spannungen, die jeweils den ersten Erfassungselektroden $E_{21}$ bis $E_{2y}$ entsprechen, als $V_1'$ bis $V_y'$ definiert sind, worin die Koordinaten der erste Erfassungselektroden als Yt bis $Y_y$ definiert sind, worin die Entfernung zwischen zwei der ersten Erfassungselektroden als 2Py definiert ist, worin $V_m'$ die relativ extreme Spannung aus den Spannungen der ersten Erfassungselektroden ist, worin die erste Erfassungs-elektrode, die die relative extreme Spannung liefert, als $E_{2m}$, 2<m<y-1 definiert ist, worin die zwei ersten Erfassungselektroden nächst zu der ersten Erfassungselektrode, die die relativ extreme Spannung liefert, als $E_{2m-1}$ und $E_{2m+1}$ definiert sind, und worin die Koordinate des Berührungspunkts in der Anordnungsrichtung der ersten Erfassungselektroden Yt ist.

3. Positionierungsverfahren nach Anspruch 2, wobei die relativ extreme Spannung unter den Spannungen der erste Erfassungselektroden (433) eine maximale Spannung ist und worin die relativ extreme Spannung unter den Spannungen der zweite Erfassungselektroden (443) eine minimale Spannung ist, wenn die erste Spannung kleiner ist als die zweite Spannung.

4. Positionierungsverfahren nach Anspruch 3, wobei die Koordinate Yt des Berührungspunkts einer Gleichung genügt wenn $V_1'$ die minimale Spannung ist:

$$Yt = Y1 + P_y - P_y \times \frac{V_1' - V_2'}{V_1' - V_R'},$$

$V_R'$ ist eine Bezugs-Spannung, wobei $V_R' > V_2' > V_1'$.

5. Positionierungsverfahren nach Anspruch 3 oder 4, wobei die Koordinate Yt des Berührungspunkts einer Gleichung genügt, wenn $V_y'$ die minimale Spannung ist:

$$Yt = Yy - P_y + P_y \times \frac{V_y' - V_{y-1}'}{V_y' - V_R'},$$

$V_R$ ist eine Bezugs-Spannung, wobei $V_R' > V_{y-1}' > V_y'$.

6. Positionierungsverfahren nach Anspruch 3, 4 oder 5, wobei die Koordinate Yt des Berührungspunkts einem Satz Gleichungen genügt, wenn $V_m'$ die minimale Spannung ist und $2<m<y-1$ :

$$\begin{cases} V_{m-1}' < V_{m+1}' \Rightarrow Yt = Ym + P_y \times \dfrac{V_{m+1}'-V_{m-1}'}{V_m'-V_{m+1}'} \\ V_{m-1}' = V_{m+1}' \Rightarrow Yt = Ym \\ V_{m-1}' > V_{m+1}' \Rightarrow Yt = Ym + P_y \times \dfrac{V_{m+1}'-V_{m-1}'}{V_m'-V_{m-1}'} \end{cases}$$

7. Positionierungsverfahren nach Anspruch 2, wobei:

   die relativ extreme Spannung unter den Spannungen der ersten Erfassungselektroden (433) eine minimale Spannung ist und die relativ extreme Spannung unter den Spannungen der zweiten Erfassungselektroden (443) eine maximale Spannung ist, wenn die erste Spannung größer ist als die zweite Spannung.

8. Positionierungsverfahren nach Anspruch 7, wobei die Koordinate Yt des Berührungspunkts einer Gleichung genügt, wenn $V_1'$ die maximale Spannung ist:

$$Yt = Y1 + P_y - P_y \times \frac{V_1'-V_2'}{V_1'-V_R'}$$

   $V_R'$ ist eine Bezugs-Spannung, wobei $V_1'>V_2'>V_R'$.

9. Positionierungsverfahren nach Anspruch 7 oder 8, wobei die Koordinate Yt des Berührungspunkts einer Gleichung genügt, wenn $V_y'$ die maximale Spannung ist:

$$Yt = Yy - P_y + P_y \times \frac{V_y'-V_{y-1}'}{V_1'-V_R'}$$

   $V_R'$ ist eine Bezugs-Spannung, wobei $V_y'>V_{y-1}'>V_R'$.

10. Positionierungsverfahren nach Anspruch 7, 8 oder 9, wobei die Koordinate Yt des Berührungpunkts einem Satz Gleichungen genügt, wenn $V_m'$ die maximale Spannung ist und $2 < m < y-1$ :

$$\begin{cases} V_{m-1}' < V_{m+1}' \Rightarrow Yt = Ym + P_y \times \dfrac{V_{m+1}'-V_{m-1}'}{V_m'-V_{m-1}'} \\ V_{m-1}' = V_{m+1}' \Rightarrow Yt = Ym \\ V_{m-1}' > V_{m+1}' \Rightarrow Yt = Ym + P_y \times \dfrac{V_{m+1}'-V_{m-1}'}{V_m'-V_{m+1}'} \end{cases}$$

11. Positionierungsverfahren nach einem der Ansprüche 1 bis 10, wobei die erste Leitschicht (431) und die zweite Leitschicht (441) Kohlenstoff-Nanoröhrchen-Folien sind, und die Hauptleit-Richtungen der ersten Leitschicht (431) und der zweiten Leitschicht (441) senkrecht zueinander stehen.

12. Positionierungsverfahren nach einem der Ansprüche 1 bis 11, wobei die erste Elektrode (432) an einer Seite der ersten Leitschicht (431) abgewandt zu den erste Erfassungselektroden (433) angeordnet ist, wobei die erste Spannung an der ersten Leitschicht (431) über die erste Elektrode (432) angelegt wird, worin die zweite Elektrode (442) an einer Seite der zweiten Leitschicht (441) abgewandt von den zweiten Erfassungselektroden (443) angeordnet ist, und wobei die zweite Spannung an der zweiten Leitschicht (441) über die zweite Elektrode (442) angelegt wird.

13. Positionierungsverfahren nach Anspruch 12, wobei die Erstreckungsrichtung der ersten Elektrode (432) und die Anordnungsrichtung der ersten Erfassungselektroden (433) senkrecht zu einer Hauptleit-Richtung der ersten Leitschicht (431) ist, und worin die Erstreckungsrichtung der zweiten Elektrode (442) und die Anordnungsrichtung Richtung der zweite Erfassungselektroden (443) senkrecht zu einer Hauptleit-Richtung der zweite Leitschicht (441) liegen.

14. Positionierungsverfahren nach Anspruch 12 oder 13, wobei die erste Spannung an den nicht gemessenen ersten Erfassungselektroden angelegt wird, wenn die ersten Erfassungselektroden (433) nacheinander gemessen werden.

15. Positionierungsverfahren nach Anspruch 12, 13 oder 14, wobei die zweite Spannung an den nicht-gemessenen zweiten Erfassungselektroden angelegt wird, wenn die zweiten Erfassungs-elektroden (443) nacheinander gemessen werden.

**Revendications**

1. Procédé de positionnement pour un écran tactile (4) comprenant :

l'utilisation d'un écran tactile (4) comprenant une première couche de transmission (43) et une deuxième couche de transmission (44) disposées en face l'une de l'autre ;
l'utilisation de la première couche de transmission (43) comprenant une première couche conductrice (431), une première électrode (432) en forme de bande et disposée sur un côté de la première couche conductrice (431) et une pluralité de premières électrodes de détection séparées (433) disposées sur un autre côté de la première couche conductrice (431) opposée à la première électrode (432), la première électrode (432) s'étendant le long d'une direction d'axe Y de l'écran tactile et la résistivité de la première couche conductrice (431) dans la direction d'axe Y étant supérieure à la résistivité de la première couche conductrice dans une direction d'axe X de l'écran tactile ;
l'utilisation de la deuxième couche de transmission (44) comprenant une deuxième couche conductrice (441), une deuxième électrode (442) en forme de bande et disposée sur un côté de la deuxième couche conductrice (441) et une pluralité de deuxièmes électrodes de détection séparées (443) disposées sur un autre côté de la deuxième couche conductrice (441) perpendiculaire aux premières électrodes de détection (433) et chacune parmi la première couche conductrice (431) et la deuxième couche conductrice (441) présentant une impédance anisotrope, les premières électrodes de détection (433) étant disposées le long de la direction d'axe Y ;
la deuxième électrode (442) s'étendant le long de la direction d'axe X et la résistivité de la deuxième couche conductrice (441) dans la direction X étant supérieure à la résistivité de la deuxième couche conductrice dans la direction d'axe Y ;
l'application d'une première tension à la première couche conductrice (431) ;
l'application d'une deuxième tension à la deuxième couche conductrice (441), un contact entre la première couche conductrice (431) et la deuxième couche conductrice (441) étant défini comme un point tactile ;
**caractérisé par** la mesure des tensions des premières électrodes de détection (433), la sélection de la tension extrême relative parmi les tensions des premières électrodes de détection (433) et en outre la sélection de la tension de la première électrode de détection (433) la plus proche de la tension extrême relative parmi les tensions des premières électrodes de détection (433) et la détermination d'une coordonnée verticale du point tactile en fonction de la tension extrême relative parmi les tensions des premières électrodes de détection (433) et en outre la détermination de la tension de la première électrode de détection (433) la plus proche de l'électrode présentant la tension extrême relative ; et
la mesure des tensions des deuxièmes électrodes de détection (443), la sélection de la tension extrême relative parmi les tensions des deuxièmes électrodes de détection (443) et en outre la sélection de la tension de la deuxième électrode de détection (443) la plus proche de la tension extrême relative parmi les tensions des deuxièmes électrodes de détection (443) et la détermination d'une coordonnée horizontale du point tactile en fonction de la tension extrême relative parmi les tensions des deuxièmes électrodes de détection (443) et en outre la détermination de la tension de la deuxième électrode de détection (443) la plus proche de l'électrode présentant la tension extrême relative.

**2.** Procédé de positionnement selon la revendication 1, les premières électrodes de détection étant disposées de manière uniforme le long de la direction d'axe Y et étant définies comme $E_{21}$ à $E_{2y}$, les tensions correspondant respectivement aux premières électrodes de détection $E_{21}$ à $E_{2y}$ étant définies comme $V_1'$ à $V_y'$, les coordonnées des premières électrodes de détection étant définies comme $Y_1$ à $Y_y$, une distance entre deux électrodes adjacentes quelconques parmi les premières électrodes de détection étant définie comme $2P_y$, $V_m'$ étant la tension extrême relative parmi les tensions des premières électrodes de détection, la première électrode de détection appliquant la tension extrême relative étant définie comme $E_{2m}$, $2 \leq m \leq y-1$, les deux premières électrodes de détection les plus proches de la première électrode de détection appliquant la tension extrême relative étant définies comme $E_{2m-1}$ et $E_{2m+1}$ et la coordonnée du point tactile dans la direction de disposition des premières électrodes de détection étant Yt.

**3.** Procédé de positionnement selon la revendication 2, la tension extrême parmi les tensions des premières électrodes de détection (433) étant une tension maximale et la tension extrême relative parmi les tensions des deuxièmes électrodes de détection (443) étant une tension minimale lorsque la première tension est inférieure à la deuxième tension.

**4.** Procédé de positionnement selon la revendication 3, la coordonnée Yt du point tactile satisfaisant à une équation lorsque $V_1'$ est la tension minimale :

$$Yt = Y1 + P_y - P_y \times \frac{V_1' - V_2'}{V_1' - V_R'},$$

$V_R'$ étant une tension de référence, où $V_R' > V_2' > V_1'$.

**5.** Procédé de positionnement selon la revendication 3 ou 4, la coordonnée Yt du point tactile satisfaisant à une équation lorsque $V_y'$ est la tension minimale :

$$Yt = Yy - P_y + P_y \times \frac{V_y' - V_{y-1}'}{V_y' - V_R'},$$

$V_R'$ étant une tension de référence, où $V_R' > V_{y-1}' > V_y'$.

**6.** Procédé de positionnement selon la revendication 3, 4 ou 5, la coordonnée Yt du point tactile satisfaisant à un ensemble d'équations lorsque $V_m'$ est la tension minimale et $2 < m < y-1$ :

$$\begin{cases} V_{m-1}' < V_{m+1}' \Rightarrow Yt = Ym + P_y \times \dfrac{V_{m+1}' - V_{m-1}'}{V_m' - V_{m+1}'} \\[2mm] V_{m-1}' = V_{m+1}' \Rightarrow Yt = Ym \\[2mm] V_{m-1}' > V_{m+1}' \Rightarrow Yt = Ym + P_y \times \dfrac{V_{m+1}' - V_{m-1}'}{V_m' - V_{m-1}'} \end{cases}.$$

**7.** Procédé de positionnement selon la revendication 2, la tension extrême relative parmi les tensions des premières électrodes de détection (433) étant une tension minimale et la tension extrême relative parmi les tensions des deuxièmes électrodes de détection (443) étant une tension maximale lorsque la première tension est supérieure par rapport à la deuxième tension.

**8.** Procédé de positionnement selon la revendication 7, la coordonnée Yt du point tactile satisfaisant à une équation lorsque $V_1'$ est la tension maximale :

$$Yt = Y1 + P_y - P_y \times \frac{V_1' - V_2'}{V_1' - V_R'},$$

$V_R'$ étant une tension de référence, où $V_1' > V_2' > V_R'$.

9. Procédé de positionnement selon la revendication 7 ou 8, la coordonnée Yt du point tactile satisfaisant à une équation lorsque $V_y'$ est la tension maximale :

$$Yt = Yy - P_y + P_y \times \frac{V_y' - V_{y-1}'}{V_1' - V_R'},$$

$V_R'$ étant une tension de référence, $V_y' > V_{y-1}' > V_R'$.

10. Procédé de positionnement selon la revendication 7, 8 ou 9, la coordonnée Yt du point tactile satisfaisant à un ensemble d'équations lorsque $V_m'$ est la tension maximale et $2 < m < y-1$ :

$$\begin{cases} V_{m-1}' < V_{m+1}' \Rightarrow Yt = Ym + P_y \times \frac{V_{m+1}' - V_{m-1}'}{V_m' - V_{m-1}'} \\ V_{m-1}' = V_{m+1}' \Rightarrow Yt = Ym \\ V_{m-1}' > V_{m+1}' \Rightarrow Yt = Ym + P_y \times \frac{V_{m+1}' - V_{m-1}'}{V_m' - V_{m+1}'} \end{cases}.$$

11. Procédé de positionnement de l'une quelconque des revendications 1 à 10, la première couche conductrice et la deuxième couche conductrice (441) étant des films de nanotubes de carbone et des directions conductrices principales de la première couche conductrice (431) et de la deuxième couche conductrice (441) étant perpendiculaires l'une par rapport à l'autre.

12. Procédé de positionnement de l'une quelconque des revendications 1 à 11, la première électrode (432) étant disposée sur un côté de la première couche conductrice (431) opposée aux premières électrodes de détection (433), la première tension étant appliquée à la première couche conductrice (431) via la première électrode (432), la deuxième électrode (442) étant disposée sur un côté de la deuxième couche conductrice (441) à l'opposé des deuxièmes électrodes de détection (443) et la deuxième tension étant appliquée à la deuxième couche conductrice (441) via la deuxième électrode (442).

13. Procédé de positionnement selon la revendication 12, la direction d'extension de la première électrode (432) et la direction de disposition des premières électrodes de détection (433) étant perpendiculaires à une direction de conduction principale de la première couche conductrice (431) et la direction d'extension de la deuxième électrode (442) et la direction de disposition des deuxièmes électrodes de détection (443) étant perpendiculaires à une direction de conduction principale de la deuxième couche conductrice (441).

14. Procédé de positionnement selon la revendication 12 ou 13, la première tension étant appliquée aux premières électrodes de détection non mesurées lorsque les premières électrodes de détection (433) sont mesurées séquentiellement.

15. Procédé de positionnement selon la revendication 12, 13 ou 14, la deuxième tension étant appliquée aux deuxièmes électrodes de détection non mesurées lorsque les deuxièmes électrodes de détection (443) sont mesurées séquentiellement.

FIG. 1

FIG. 2

voltage (V)

5V ────────────────

X

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2063349 A2
- WO 2009023242 A1
- US 6504531 B1
- US 20050275634 A1